# FASCICULE DE BREVET EUROPEEN

(11) **EP 3 705 347 B1**
(45) Date de publication et mention de la délivrance du brevet: **07.09.2022**
(21) Numéro de dépôt: 20160425.3
(22) Date de dépôt: 02.03.2020
(51) Int. Cl.: B60N 2/42, B60N 2/427, B62D 25/20

(54) **VÉHICULE DOTÉ D'UN DISPOSITIF ANTI SOUS MARINAGE AMÉLIORÉ**
FAHRZEUG, DAS MIT EINER VERBESSERTEN ANTI-SUBMARINING-VORRICHTUNG AUSGESTATTET IST
VEHICLE PROVIDED WITH IMPROVED ANTI-SUBMARINING DEVICE

(30) Priorité: 07.03.2019 FR 1902326
(43) Date de publication de la demande: 09.09.2020
(73) Titulaire: Renault s.a.s, 92100 Boulogne Billancourt (FR)
(72) Inventeur: MORGAN, Ben-Allouch, 78280 Guyancourt (FR); KIM, Sungduk, Gyeonggi-do (KR); MINO, Fabien, 94400 Vitry sur Seine (FR); OLIVIER, Louis, 78000 Versailles (FR)
(74) Mandataire: Renault Group

(56) Documents cités:
- JP-A- 2016 037 215
- JP-A- 2017 109 628

## Description

Généralement, un dispositif anti sous-marinage est placé dans une assise d'un siège de véhicule, ou au niveau d'un plancher de ce véhicule sous l'assise dudit siège.

En sécurité passive, lors d'un choc frontal, on désigne par « sous-marinage » le glissement vers le bas de l'occupant par rapport à la ceinture de sécurité pendant la phase de décélération. La retenue de l'occupant ne se fait alors plus par les parties osseuses du corps comme cela était initialement prévu, mais par appui sur les organes, pouvant alors engendrer des blessures graves.

Pour assurer un meilleur niveau de protection des passagers d'un véhicule lors d'un choc frontal, il est donc important de limiter le sous-marinage en permettant à la ceinture de sécurité de s'appuyer sur les os du bassin (les os iliaques).

Dans le cas par exemple d'une banquette non coulissante, le dispositif anti sous-marinage apparait sous la forme d'une pièce rigide placée sous l'assise de siège, et sur laquelle le bassin vient s'appuyer pendant la retenue. La géométrie de cette pièce est conçue par rapport au centre du bassin de l'occupant (point H) qui est assis sur la banquette.

Cette pièce représentant le dispositif anti sous-marinage doit également être dimensionnée en fonction des niveaux d'effort minimum et maximum, horizontal et vertical, que ladite pièce doit appliquer au bassin pendant la phase d'arrêt lors d'un choc frontal.

Les efforts résistants appliqués sur le bassin sont obtenus par la déformation de la pièce rigide sous le siège, avec une raideur qui augmente à mesure que le bassin avance.

La demande FR3037011 se rapporte à un dispositif anti sous-marinage tel qu'un bossage destiné à s'étendre transversalement dans le véhicule. Ce dispositif comporte au moins une zone transversale dont l'épaisseur est augmentée localement par rapport à l'épaisseur du reste du dispositif.

La solution technique la plus couramment utilisée pour empêcher le phénomène de sous-marinage sur une banquette arrière, est d'intégrer une « bosse » dans le plancher arrière, juste sous l'assise de ladite banquette. Cette solution économique est adaptée lorsqu'une seule version de banquette est montée sur le véhicule et que celle-ci n'est pas coulissante.

Lorsque la hauteur de la bosse est trop importante pour être emboutie, une solution par pièce spécifique soudée est utilisée.

Lorsque les sièges arrière sont coulissants, la fonction anti sous-marinage doit être intégrée au siège pour que sa position par rapport au bassin ne change pas, et aussi pour laisser le plancher plat pour les rails de coulissement. Cette solution est plus coûteuse.

Aujourd'hui, lorsqu'un même véhicule propose des sièges fixes ou coulissants selon le niveau de gamme, il est nécessaire, soit de placer la fonction anti sous-marinage dans le siège pour toutes les versions, ce qui engendre un surcoût pour les banquettes fixes, soit de prévoir deux formes de plancher engendrant un surcoût de gestion de la diversité de la caisse. Une troisième solution consiste à rapporter une bosse vissée sur un plancher plat pour les versions à banquette fixe. Mais dans ce cas, la liaison de la bosse au plancher présente une certaine fragilité par manque de raideur, qui n'existe pas lorsque la bosse est soudée au plancher. Ce manque de raideur doit être compensé par des pièces plus épaisses, qui sont donc plus lourdes et plus chères.

Le document JP 2016-037215 A décrit un véhicule comprenant un plancher, un système de siège doté d'une assise, un dispositif anti sous-marinage fixé au plancher sous l'assise, ce dispositif anti sous-marinage comprenant un tube s'étendant au-dessus du plancher selon une direction transversale du véhicule, le tube étant fixé au plancher au moyen d'éléments de liaison déformables, chaque élément de liaison ayant une extrémité supérieure soudée au tube et une extrémité inférieure fixée au plancher par des vis. Le document JP 2017-109628 A décrit un véhicule avec un dispositif anti sous-marinage alternatif.

Un véhicule selon l'invention comporte un dispositif anti sous-marinage permettant de s'affranchir des inconvénients relevés dans l'état de la technique.

Afin de bien comprendre le positionnement des différentes pièces impliquées dans un véhicule selon l'invention, la description est réalisée en faisant référence à un repère orthonormé direct XYZ dans lequel X est un axe longitudinal avant-arrière du véhicule orienté vers l'arrière, Y est un axe transversal orienté vers la droite du véhicule et Z est un axe vertical dirigé vers le haut.

L'invention a pour objet un véhicule comprenant un plancher et un système de siège doté d'une assise et permettant à au moins une personne d'être assise dans ledit véhicule.

Selon l'invention, le véhicule comprend un dispositif anti sous-marinage, selon la revendication 1, fixé au plancher et situé sous l'assise du système de siège, ledit dispositif anti sous-marinage comprenant un tube s'étendant au-dessus du plancher selon une direction transversale du véhicule, ledit tube étant fixé au plancher au moyen d'au moins un élément de liaison déformable. De cette manière, ledit au moins un élément de liaison ne va donc pas s'opposer à un déplacement du tube sous l'effet de l'effort engendré par le déplacement des occupants qui seraient assis sur le système de sièges, dans le cas d'un choc frontal du véhicule. Au contraire, il va accompagner ce déplacement en se déformant, afin que le tube ne constitue pas une butée fixe, susceptible de blesser ces occupants en phase de déplacement dans le cas d'un choc frontal. Préférentiellement, ledit au moins un élément de liaison est une pièce d'un seul tenant présentant une certaine rigidité lorsqu'ils ne sont soumis à aucune contrainte, et qui sont susceptibles de se déformer lorsqu'ils sont soumis à des efforts du niveau de ceux qui sont produits par les occupants qui sont mis en mouvement lors d'une phase de décélération suivant un choc frontal du véhicule. Le tube peut être, soit indéformable, soit présenter une légère déformation en cas de choc. En effet, des essais montrent que la déformation du tube peut absorber une quantité d'énergie significative, qui contribue à l'atteinte des objectifs de sécurité. Le terme « système de siège » est générique, et peut tout aussi bien désigner par exemple, un siège simple, une banquette deux places ou une banquette trois places. En fonction de la longueur du système de siège considérée selon un axe transversal du véhicule, le tube anti sous-marinage sera plus ou moins étendu et pourra posséder avantageusement deux, trois ou quatre éléments de liaison déformables. Chaque élément de liaison déformable est donc solidarisé à la fois au plancher et au tube. Avantageusement, la déformation de chaque élément de liaison s'effectue par une pliure de celui-ci. Le dispositif anti sous-marinage d'un véhicule selon l'invention, est facilement adaptable à une grande variété de véhicules, au moyen d'un simple réajustement de la longueur du tube et de la géométrie des éléments de liaison déformables.

Selon une caractéristique possible de l'invention, le système se siège est une banquette fixe. Avantageusement, la banquette fixe est une banquette de rang 2. Un dispositif anti sous-marinage selon l'invention est particulièrement mais non exclusivement adapté à une banquette trois places.

Selon une caractéristique possible de l'invention, le tube est au contact de l'assise de la banquette. Pour cette configuration, le tube est placé sous l'assise du système de siège et au contact de celle-ci, afin de jouer efficacement son rôle de barre anti sous-marinage.

Selon une caractéristique possible de l'invention, la banquette est une banquette trois places, le tube étant fixé au plancher au moyen de quatre éléments de liaison déformables. Il s'agit d'une configuration optimisée mais non exclusive d'un véhicule selon l'invention. Avantageusement, les quatre éléments de liaison déformables sont régulièrement espacés le long du tube.

Selon une caractéristique de l'invention, chaque élément de liaison est assimilable à une feuille métallique apte à se plier sous l'effet de l'effort généré par le déplacement d'un occupant qui serait assis sur la banquette, dans le cas d'un choc frontal. En effet, lors d'un tel choc frontal, les occupants assis sur le système de siège vont brutalement se déplacer lors d'une phase de décélération suivant ce choc, en exerçant une pression sur le tube anti sous-marinage. En se pliant sous l'effet de cette pression, les éléments de liaison vont contrôler le déplacement du tube afin qu'il ne prenne pas une direction aléatoire pouvant s'avérer dangereuse pour les occupants du véhicule.

Selon une caractéristique possible de l'invention, chaque élément de liaison est en acier, et possède une épaisseur comprise entre 0.8mm et 1.2mm. Il s'agit d'un exemple illustratif et non pas limitatif d'un élément de liaison déformable d'un véhicule selon l'invention.

Selon une caractéristique possible de l'invention, le tube est en acier, ledit tube ayant un diamètre de 24mm et une épaisseur de 1.2mm. Il s'agit d'un exemple illustratif et non pas limitatif d'un tube d'un dispositif anti sous-marinage d'un véhicule selon l'invention.

Selon l'invention, le tube est relié au plancher au moyen de deux pontets d'extrémité. Ces pontets peuvent, soit être des pièces rapportées venant se solidariser au tube, soit faire partie intégrante dudit tube en constituant avec celui-ci une pièce monobloc d'un seul tenant. Chaque pontet est relié de façon rigide à la fois au plancher et au tube.

Selon une caractéristique possible de l'invention, les pontets sont soudés au tube. De cette manière, la structure constituée du tube, des pontets et des éléments de liaison déformables peut être fabriquée à part, dans un lieu donné, avant d'être acheminée le long d'une chaine de montage d'un véhicule pour être fixée à un véhicule.

Selon une caractéristique possible de l'invention, chaque pontet est fixé au plancher avec au moins une vis, notamment avec deux vis. La présence de deux vis garantit à chacune de ces pièces un arrimage solide au plancher du véhicule.

Un véhicule selon l'invention présente l'avantage de posséder un dispositif anti sous-marinage performant, peu encombrant et léger. Il a de plus l'avantage d'être facile et rapide à fabriquer, car les pièces impliquées dans le dispositif anti sous-marinage sont peu nombreuses, ont des géométries simples et sont réalisées dans des matériaux usuels. Un dispositif anti sous-marinage d'un véhicule selon l'invention, présente l'avantage d'être facilement ajustable, au moyen d'un simple réajustement de la longueur du tube et au moyen d'une simple modification de la géométrie des éléments de liaison déformables.

On donne ci-après une description détaillée d'un mode de réalisation préféré d'un véhicule selon l'invention, en se référant aux figures suivantes:
[Fig. 1] est une vue en perspective d'un dispositif anti sous-marinage et d'un plancher d'un véhicule selon l'invention,
[Fig. 2] est une vue en perspective d'une banquette avec trois occupants et d'un dispositif anti sous-marinage d'un véhicule selon l'invention, dans une situation normale de roulage,
[Fig. 3] est une vue en perspective d'une banquette avec trois occupants et d'un dispositif anti sous-marinage d'un véhicule selon l'invention, lors d'un choc frontal du véhicule,
[Fig. 4] est une vue en perspective d'un dispositif anti sous-marinage et d'un plancher d'un deuxième mode de réalisation d'un véhicule selon l'invention,
[Fig. 5] est une vue en perspective d'un dispositif anti sous-marinage et d'un plancher d'un troisième mode de réalisation d'un véhicule selon l'invention.

En sécurité passive, lors d'un choc frontal, on désigne par « sous-marinage » le glissement vers le bas d'un occupant par rapport à sa ceinture de sécurité pendant la phase de décélération suivant ledit choc. La retenue de l'occupant ne se fait alors plus par les parties osseuses du corps, mais par appui sur les organes, pouvant générer de graves blessures.

Pour assurer un meilleur niveau de protection des passagers d'un véhicule lors d'un choc frontal, il est donc important de limiter le sous-marinage en permettant à la ceinture de sécurité de s'appuyer sur les os du bassin (les os iliaques).

Dans un véhicule 100 selon l'invention, le dispositif anti sous-marinage 1 est particulièrement mais non exclusivement adapté à une banquette 2 arrière de véhicule. Dans l'exemple considéré, la banquette 2 comprend trois places 3, 4, 5 placées cote à cote le long d'un axe transversal Y du véhicule. Cette banquette 2 est fixe au sein du véhicule, et comprend classiquement une assise 6 et un dossier 7. Trois ceintures 8, 9, 10 de sécurité sont associées à cette banquette 2 pour assurer la sécurité des passagers qui seraient assis sur celle-ci, lors d'un choc extérieur du véhicule.

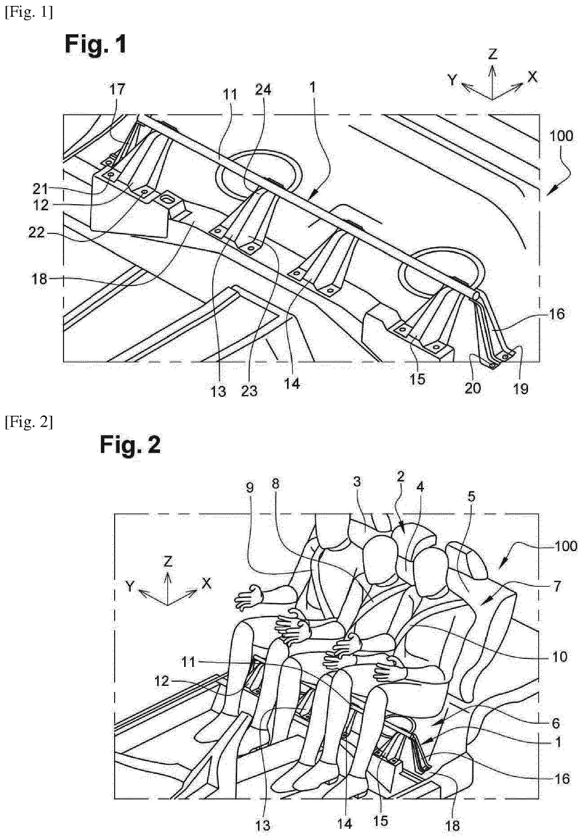

En se référant à la figure 1, un premier mode de réalisation d'un véhicule 100 selon l'invention comprend un dispositif anti sous-marinage 1 destiné à renforcer la sécurité des passagers qui seraient assis sur la banquette 2, ledit dispositif 1 comprenant un tube 11, quatre éléments de liaison 12, 13, 14, 15 déformables et deux pontets d'extrémité 16, 17.

Le tube 11, qui est préférentiellement de forme cylindrique, est fixé au plancher 18 du véhicule 100 par l'intermédiaire desdits deux pontets 16, 17 et desdits quatre éléments de liaison 12, 13, 14, 15. Le tube 11 s'étend selon une direction transversale Y du véhicule 100, en étant surélevé par rapport au plancher 18 et en venant au contact d'une surface inférieure de l'assise 6 de la banquette 2. Le tube 11 est par exemple réalisé en acier, et présente une épaisseur de 1.2mm pour un diamètre de 24mm.

Les deux pontets 16, 17 prolongent les deux extrémités du tube 11 considérées le long d'un axe longitudinal dudit tube 11. Ces deux pontets 16, 17 sont inclinés d'un angle de 90°plus ou moins 20°p ar rapport au tube 11. Ils peuvent constituer des pièces rapportées qui sont fixées au tube 11 par soudure, ou peuvent former avec ledit tube 11 une seule et même pièce monobloc fabriquée lors d'une même opération. Avantageusement, les pontets 16, 17 sont en acier et ont une épaisseur de 0.7mm. Chaque pontet 16, 17 est fixé au plancher 18 au moyen de deux vis 19, 20 alignées suivant un axe longitudinal du véhicule 100.

Les éléments de liaison 12, 13, 14, 15 sont assimilable à des feuilles métalliques déformables, préférentiellement réalisées en acier avec une épaisseur comprise entre 0.8mm et 1.2mm. Chaque élément de liaison12, 13, 14, 15 est relié au tube 11 par soudure et est fixé au plancher 18 par l'intermédiaire de deux vis 21, 22 alignées selon un axe transversal Y du véhicule 100. Les éléments de liaison 12, 13, 14, 15 sont identiques et possèdent chacun une première extrémité élargie 23 et une deuxième extrémité rétrécie 24, lesdites extrémités devant être considérées le long d'un axe longitudinal de l'élément de liaison 12, 13, 14, 15. Lesdites deux extrémités 23, 24 sont reliées entre elles par un corps central délimité par deux bords convergents s'étendant de la première extrémité élargie 23 vers la deuxième extrémité rétrécie 24. Chaque élément de liaison déformable 12, 13, 14, 15 est soudé au tube 11 au niveau de sa deuxième extrémité 24 et est fixé au plancher 18 avec les deux vis 21, 22 au niveau de sa première extrémité 23 élargie. Chaque élément de liaison 12, 13, 14, 15 s'étend dans un plan transversal, qui est incliné par rapport à un plan vertical. De cette manière, la première extrémité élargie 23 se retrouve devant la deuxième extrémité rétrécie 24. Les quatre éléments de liaison déformables 12, 13, 14, 15 sont inscrits dans un même plan. Chaque élément de liaison 12, 13, 14, 15 présente une certaine rigidité, et est apte à se déformer sous l'effet des efforts générés par le déplacement brutal d'un passager, qui serait assis sur la banquette 2 et qui subirait un choc frontal du véhicule.

La structure constituée par le tube 11, les deux pontets 16, 17 et les quatre éléments de liaison déformables 12, 13, 14, 15 peut ainsi être fabriquée à part, avant d'être acheminée le long d'une chaine de montage puis d'être arrimée à un véhicule.

En se référant à la figure 2, sur laquelle l'assise 6 de la banquette 2 a été artificiellement retirée pour pouvoir visualiser le dispositif anti sous-marinage 1, ledit dispositif 1 est placé sous la banquette 2 de sorte que le tube 11 vienne au contact d'une face inférieure de l'assise 6.

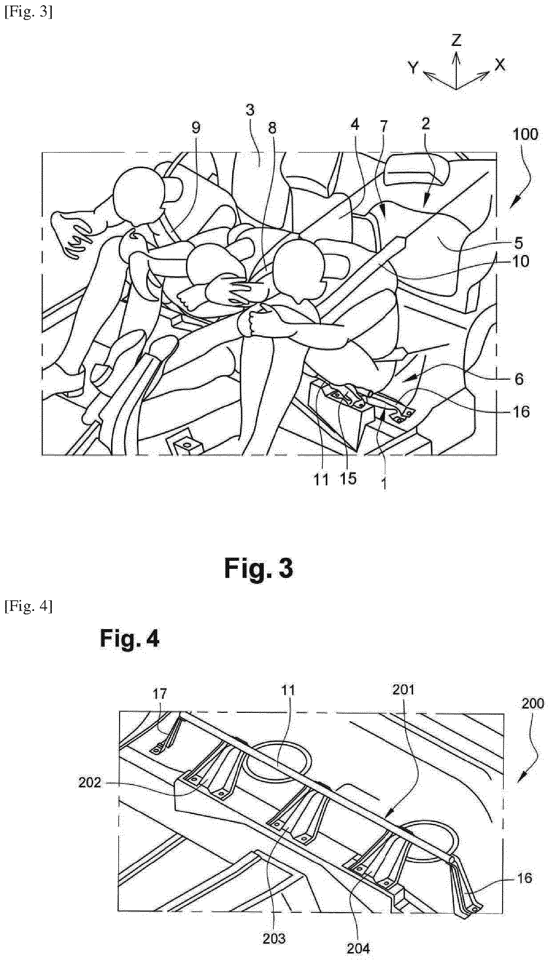

En se référant à la figure 3, lorsque survient un choc frontal du véhicule, le corps de chaque passager assis sur la banquette 2 est brutalement projeté vers l'avant lors d'une phase de décélération suivant ledit choc. La partie arrière et haute des jambes de chaque passager assis, vient alors au contact du tube 11 du dispositif anti sous-marinage, en exerçant une poussée vers l'avant sur ledit tube 11. Le tube 11 bascule alors vers l'avant au moyen d'une rotation des deux pontets 16, 17 d'extrémité autour de leurs points d'ancrage 19, 20 au plancher 18, ledit tube 11 conservant son orientation initiale durant ce basculement afin de limiter le phénomène d'anti sous-marinage. Durant ce basculement, les quatre éléments de liaison 12, 13, 14, 15 déformables subissent une compression entrainant un écrasement de ceux-ci par pliure. Ces quatre éléments de liaison 12, 13, 14, 15 accompagnent le basculement du tube 11, tout en présentant une certaine résistance vis-à-vis de ce basculement. Ils permettent donc d'amortir le choc frontal du véhicule tout en préservant la fonction anti sous-marinage du tube 11.

En se référant à la figure 4, selon un deuxième mode de réalisation préféré d'un véhicule 200 selon l'invention, le dispositif anti sous-marinage 201 ne comprend que trois éléments de liaison 202, 203, 204 déformables équitablement répartis le long du tube 11. Avantageusement, chaque élément de liaison 202, 203, 204 se retrouve au droit d'un passager qui serait assis sur la banquette 2. Afin de produire les mêmes effets que les quatre éléments de liaison 12, 13, 14, 15 du premier mode de réalisation, ces trois éléments de liaison 202, 203, 204 sont légèrement surdimensionnés par rapport auxdits quatre éléments de liaison 12, 13, 14, 15. De la même manière, chaque élément de liaison déformable 202, 203, 204 est soudé au tube 11 et est fixé au plancher au moyen de deux vis.

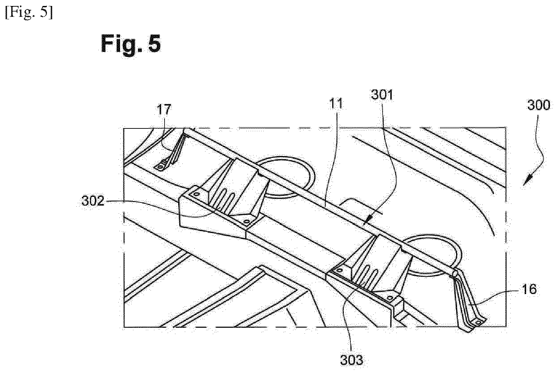

En se référant à la figure 5, selon un troisième mode de réalisation préféré d'un véhicule 300 selon l'invention, le dispositif anti sous-marinage 301 ne comprend que deux éléments de liaison 302, 303 déformables placés le long du tube 11. Afin de produire les mêmes effets que les quatre éléments de liaison 12, 13, 14, 15 du premier mode de réalisation, ces deux éléments de liaison 302, 303, sont légèrement surdimensionnés par rapport aux trois éléments de liaison 202, 203, 204 du deuxième mode de réalisation. De la même manière, chaque élément de liaison déformable 302, 303 est soudé au tube 11 et est fixé au plancher au moyen d'une ou de deux vis.

Un dispositif 1, 201, 301 anti sous-marinage d'un véhicule selon l'invention, est facilement adaptable à une pluralité de véhicules, au moyen d'une simple modification de la longueur du tube 11 et/ou de la géométrie des éléments de liaison déformables (12, 13, 14, 15, 202, 203, 204, 302, 303).

## Revendications

1. Véhicule (100, 200, 300) comprenant un plancher (18), un système de siège (2) doté d'une assise (6) et permettant à au moins une personne d'être assise dans ledit véhicule (100, 200, 300), et un dispositif anti sous-marinage (1, 201, 301) fixé au plancher (18) et situé sous l'assise (6) du système de siège (2), le dispositif anti sous-marinage (1, 201, 301) comprenant un tube (11) s'étendant au-dessus du plancher (18) selon une direction transversale du véhicule (100, 200, 300), ledit tube (11) étant fixé au plancher (18) au moyen d'au moins un élément de liaison (12, 13, 14, 15, 202, 203, 204, 302, 303) déformable, chaque élément de liaison (12, 13, 14, 15, 202, 203, 204, 302, 303) possédant une première extrémité élargie (23) et une deuxième extrémité rétrécie (24), ces deux extrémités (23, 24) étant reliées entre elles par un corps central délimité par deux bords convergents s'étendant de la première extrémité élargie (23) vers la deuxième extrémité rétrécie (24), chaque élément de liaison déformable étant soudé au tube (11) au niveau de sa deuxième extrémité (24) et étant fixé aux plancher (18) par au moins une vis (21, 22) au niveau de sa première extrémité élargie (23), **caractérisé en ce que** chaque élément de liaison (12, 13, 14, 15) s'étend dans un plan transversal, qui est incliné par rapport à un plan vertical, la première extrémité élargie (23) se trouvant devant la deuxième extrémité rétrécie (24), et **en ce que** le tube (11) est relié au plancher (18) au moyen de deux pontets d'extrémité (16, 17), le tube basculant vers l'avant lors d'un choc, par rotation des deux pontets (16, 17) autour de leur points d'ancrage (19, 20) au plancher (18).

2. Véhicule selon la revendication 1, **caractérisé en ce que** le système de siège est une banquette (2) fixe.

3. Véhicule selon la revendication 2, **caractérisé en ce que** le tube (11) est au contact de l'assise (6) de la banquette (2).

4. Véhicule selon l'une quelconque des revendications 2 ou 3, **caractérisé en ce que** la banquette (2) est une banquette trois places, et **en ce que** le tube (11) est fixé au plancher (18) au moyen de quatre éléments de liaison déformables (12, 13, 14, 15).

5. Véhicule selon l'une quelconque des revendications 1 à 4, **caractérisé en ce que** chaque élément de liaison (12, 13, 14, 15, 202, 203, 204, 302, 303) est assimilable à une feuille métallique apte à se plier sous l'effet de l'effort généré par le déplacement d'un occupant qui serait assis sur la banquette (2), dans le cas d'un choc frontal.

6. Véhicule selon la revendication 5, **caractérisé en ce que** chaque élément de liaison (12, 13, 14, 15, 202, 203, 204, 302, 303) est en acier, et possède une épaisseur comprise entre 0.8mm et 1.2mm.

7. Véhicule selon l'une quelconque des revendications 1 à 6, **caractérisé en ce que** le tube (11) est en acier, et **en ce qu'**il comprend un diamètre de 24mm et une épaisseur de 1.2mm.

8. Véhicule selon l'une quelconque des revendications précédentes, **caractérisé en ce que** les pontets (16, 17) sont soudés au tube (11).

9. Véhicule selon l'une quelconque des revendications précédentes, **caractérisé en ce que** chaque pontet (16, 17) est fixé au plancher (18) avec au moins une vis (19, 20, 21, 22), notamment deux vis.

## Patentansprüche

1. Fahrzeug (100, 200, 300), welches einen Boden (18), ein Sitzsystem (2), das mit einem Sitzteil (6) ausgestattet ist und wenigstens einer Person ermöglicht, im Fahrzeug (100, 200, 300) zu sitzen, und eine Anti-Submarining-Vorrichtung (1, 201, 301), die am Boden (18) befestigt ist und sich unter dem Sitzteil (6) des Sitzsystems (2) befindet, umfasst, wobei die Anti-Submarining-Vorrichtung (1, 201, 301) ein Rohr (11) umfasst, das sich oberhalb des Bodens (18) in einer Querrichtung des Fahrzeugs (100, 200, 300) erstreckt, wobei das Rohr (11) am Boden (18) mittels wenigstens eines verformbaren Verbindungselements (12, 13, 14, 15, 202, 203, 204, 302, 303) befestigt ist, wobei jedes Verbindungselement (12, 13, 14, 15, 202, 203, 204, 302, 303) ein verbreitertes erstes Ende (23) und ein eingeschnürtes zweites Ende (24) besitzt, wobei diese zwei Enden (23, 24) durch einen zentralen Körper miteinander verbunden sind, der von zwei konvergierenden Rändern begrenzt wird, die sich vom verbreiterten ersten Ende (23) zum eingeschnürten zweiten Ende (24) erstrecken, wobei jedes verformbare Verbindungselement an seinem zweiten Ende (24) an das Rohr (11) angeschweißt ist und an seinem verbreiterten ersten Ende (23) durch wenigstens eine Schraube (21, 22) am Boden (18) befestigt ist,
**dadurch gekennzeichnet, dass** sich jedes Verbindungselement (12, 13, 14, 15) in einer Querebene erstreckt, welche in Bezug auf eine vertikale Ebene geneigt ist, wobei sich das verbreiterte erste Ende (23) vor dem eingeschnürten zweiten Ende (24) befindet, und dadurch, dass das Rohr (11) mit dem Boden (18) mittels zweier Endstege (16, 17) verbunden ist, wobei das Rohr bei einem Aufprall durch Drehung der zwei Stege (16, 17) um ihre Verankerungspunkte (19, 20) am Boden (18) nach vorn kippt.

2. Fahrzeug nach Anspruch 1, **dadurch gekennzeichnet, dass** das Sitzsystem eine feststehende Sitzbank (2) ist.

3. Fahrzeug nach Anspruch 2, **dadurch gekennzeichnet, dass** sich das Rohr (11) in Kontakt mit dem Sitzteil (6) der Sitzbank (2) befindet.

4. Fahrzeug nach einem der Ansprüche 2 oder 3, **dadurch gekennzeichnet, dass** die Sitzbank (2) eine dreisitzige Sitzbank ist, und dadurch, dass das Rohr (11) am Boden (18) mithilfe von vier verformbaren Verbindungselementen (12, 13, 14, 15) befestigt ist.

5. Fahrzeug nach einem der Ansprüche 1 bis 4, **dadurch gekennzeichnet, dass** jedes Verbindungselement (12, 13, 14, 15, 202, 203, 204, 302, 303) mit einer Metallfolie vergleichbar ist, die in der Lage ist, sich im Fall eines Frontalaufpralls unter der Einwirkung der Kraft, die durch die Verlagerung eines Insassen erzeugt wird, der auf der Sitzbank (2) sitzen würde, zu biegen.

6. Fahrzeug nach Anspruch 5, **dadurch gekennzeichnet, dass** jedes Verbindungselement (12, 13, 14, 15, 202, 203, 204, 302, 303) aus Stahl besteht und eine Dicke zwischen 0,8 mm und 1,2 mm besitzt.

7. Fahrzeug nach einem der Ansprüche 1 bis 6, **dadurch gekennzeichnet, dass** das Rohr (11) aus Stahl besteht, und dadurch, dass es einen Durchmesser von 24 mm und eine Dicke von 1,2 mm aufweist.

8. Fahrzeug nach einem der vorhergehenden Ansprüche, **dadurch gekennzeichnet, dass** die Stege (16, 17) an das Rohr (11) angeschweißt sind.

9. Fahrzeug nach einem der vorhergehenden Ansprüche, **dadurch gekennzeichnet, dass** jeder Steg (16, 17) mit wenigstens einer Schraube (19, 20, 21, 22), insbesondere mit zwei Schrauben, am Boden (18) befestigt ist.

## Claims

1. Vehicle (100, 200, 300) comprising a floor (18), a seat system (2) provided with a seat pan (6) and allowing at least one person to be seated in said vehicle (100, 200, 300), and an anti-submarining device (1, 201, 301) fastened to the floor (18) and situated below the seat pan (6) of the seat system (2), the anti-submarining device (1, 201, 301) comprising a tube (11) extending above the floor (18) in a transverse direction of the vehicle (100, 200, 300), the tube (11) being fastened to the floor (18) by means of at least one deformable connecting element (12, 13, 14, 15, 202, 203, 204, 302, 303), each connecting element (12, 13, 14, 15, 202, 203, 204, 302, 303) having a first widened end (23) and a second narrowed end (24), these two ends (23, 24) being connected to one another by a central body delimited by two convergent edges extending from the first widened end (23) to the second narrowed end (24), each deformable connecting element being welded to the tube (11) at its second end (24) and being fastened to the floor (18) by at least one screw (21, 22) at its first widened end (23), **characterized in that** each connecting element (12, 13, 14, 15) extends in a transverse plane, which is inclined with respect to a vertical plane, the first widened end (23) being located in front of the second narrowed end (24), and **in that** the tube (11) is connected to the floor (18) by means of two end bridges (16, 17), the tube tilting towards the front in the event of an impact, by rotation of the two bridges (16, 17) about their anchoring points (19, 20) to the floor (18).

2. Vehicle according to Claim 1, **characterized in that** the seat system is a fixed bench seat (2).

3. Vehicle according to Claim 2, **characterized in that** the tube (11) is in contact with the seat pan (6) of the bench seat (2).

4. Vehicle according to either one of Claims 2 and 3, **characterized in that** the bench seat (2) is a bench seat with three places, and **in that** the tube (11) is fastened to the floor (18) by means of four deformable connecting elements (12, 13, 14, 15).

5. Vehicle according to any one of Claims 1 to 4, **characterized in that** each connecting element (12, 13, 14, 15, 202, 203, 204, 302, 303) can be compared to a metal sheet able to bend under the effect of the force generated by the movement of an occupant who would be seated on the bench seat (2), in the event of a frontal impact.

6. Vehicle according to Claim 5, **characterized in that** each connecting element (12, 13, 14, 15, 202, 203, 204, 302, 303) is made of steel and has a thickness of between 0.8 mm and 1.2 mm.

7. Vehicle according to any one of Claims 1 to 6, **characterized in that** the tube (11) is made of steel, and **in that** it has a diameter of 24 mm and a thickness of 1.2 mm.

8. Vehicle according to any one of the preceding claims, **characterized in that** the bridges (16, 17) are welded to the tube (11).

9. Vehicle according to any one of the preceding claims, **characterized in that** each bridge (16, 17) is fastened to the floor (18) with at least one screw (19, 20, 21, 22), notably two screws.
